# EUROPEAN PATENT APPLICATION

(11) **EP 4 080 353 A1**
(43) Date of publication of application: **26.10.2022**
(21) Application number: 21169879.0
(22) Date of filing: 22.04.2021
(51) Int. Cl.: G06F 8/10, B61L 27/00, G06F 8/35, G06F 11/26, G06F 11/34, G06F 11/36

(54) **SYSTEM AND METHOD FOR VERIFYING BEHAVIOR OF THE AUTONOMOUS VEHICLES**

(71) Applicant: Siemens Industry Software and Services B.V., 2289 CC Rijswijk (NL)
(72) Inventor: Saleh, Amr Hany, 3000 Leuven (BE); Nicolai, Mike, 3360 Bierbeek (BE); Van der Heide, Anne, 3000 Leuven (BE)
(74) Representative: Maier, Daniel Oliver

(57) **Abstract**

The system and method for verifying behavior of at least one autonomous vehicle (492) are disclosed. The method comprising: generating a set of scenarios to verify the behavior of the autonomous vehicle (492) using contract-based design of the autonomous vehicle (492), wherein the set of scenarios comprise parameters associated driving conditions of the autonomous vehicle (492); and validating that the set of scenarios are sufficient to verify the behavior of the autonomous vehicle (492).

## Description

The present invention relates to verifying behavior of the autonomous vehicles including unmanned vehicles. Particularly, the present invention relates to scenario-based testing of the autonomous vehicles.

The advancement in control of vehicles has resulted in widespread adoption of driving assistance systems for vehicles. Vehicles with driving assistance systems may be referred to as autonomous vehicles. The driving assistance systems enable drivers to potentially take their eyes off the road and perform secondary tasks that may not be generally permitted while driving.

To ensure the safety of the drivers, the autonomous vehicle and traffic environment around the autonomous vehicle, several regulatory requirements or tests have been established. Similarly, in the case of unmanned vehicles. There exist regulations to ensure safety of the occupants of the unmanned vehicle and the surrounding environment.

Accordingly, safety evaluation of such highly automated Vehicles, including Advanced Driver Assistance Systems and Automated Driving Functionalities is of eminent value. Real-time analysis of the safety is not an option because of the immense time and cost demands, therefore virtual testing via simulation is typically viewed as a necessary supplement safety evaluation of the vehicles.

While the principle of safety by design is fundamental to the safety evaluation, it remains insufficient for automated driving systems, because of the existence of unknown unsafe scenarios that cannot be directly designed for or verified as described in the Safety of The Intended Functionality standard (SOTIF).

There exist multiple methods to generate scenarios to test and verify behaviour of autonomous vehicles. Some methods include generating test cases that realize a logical scenario would be creating the cartesian product for the entire scenario search space for all the variables defined in the scenario, which is very costly. Other methods include Stochastic sampling from a scenario to test the behaviour of the autonomous vehicle and ontology-based scenario generation that makes use of an ontology and a knowledge-based approach to generates scenarios. However, the approach does not explore the entire scenario search space. Accordingly, such methods run the risk of omitting unsafe scenarios.

Therefore, there exists need to improve system and methods for testing and verifying behaviour of autonomous vehicles.

The object of the present invention is achieved for example by a computer implemented method for verifying behavior of at least one autonomous vehicle, the method comprising: generating a set of scenarios to verify the behavior of the autonomous vehicle using contract-based design of the autonomous vehicle, wherein the set of scenarios comprise parameters associated driving conditions of the autonomous vehicle; and validating that the set of scenarios are sufficient to verify the behavior of the autonomous vehicle.

In another example, the object is achieved by a system for verifying behavior of at least one autonomous vehicle, the system comprising: at least one processor; and at least one memory including computer readable instructions stored as a scenario generator module, the scenario generator module when executed by the processor is configured to: generate a set of scenarios to verify the behavior of the autonomous vehicle using contract-based design of the autonomous vehicle, wherein the set of scenarios simulate driving conditions of the autonomous vehicle; and validate that the set of scenarios are sufficient to verify the behavior of the autonomous vehicle.

Yet another example includes a computer readable medium having machine-readable instructions stored therein, which when executed by a processing unit, cause the processing unit to perform the method disclosed herein.

As used herein autonomous vehicles are vehicles that can sense the environment and navigate autonomously. The autonomous vehicles include multiple components for sensing and navigation. The autonomous vehicles may include driving assistance systems and fully automated unmanned vehicles. In some embodiments, the autonomous vehicles may include unmanned aerial vehicles that sense and navigate an aerial environment. Accordingly, as used herein driving conditions are not limited to driving conditions on the road and may include traffic conditions for navigation of the unmanned aerial vehicle.

As used herein behavior of the autonomous vehicle(s) includes a combination of safety performance of the autonomous vehicle and comfort performance. For example, safety performance relates to avoidance of accidents (such as collision) and close misses. The comfort performance relates to comfort of the occupants of the autonomous vehicle, such as a change in speed of the autonomous vehicle within a very short duration of time or shock absorption ability of the autonomous vehicle. The present invention can be advantageously used to verify the behavior of the autonomous vehicle not only in relation to safety but also comfort.

As used herein contract-based design refers to the design methodology of defining mechatronics and cyber-physical systems, where each component is associated with a contract which represents a clear description of the component's expected behavior that is written in an appropriate, computationally verifiable formal logic. Contracts specify the input-output behavior of a component by defining what the component guarantees, provided that its environment obeys some given assumptions. The contracts are formulated as a tuple of Assumptions (A) and Guarantees (G).

The present invention advantageously combines the contract-based design with formal verification and analysis methods. The verification methods can be used to verify the consistency of the contracts. The verification enables fully automated and exhaustive detection of the set of scenarios. The discovered set of scenarios help in discarding designs that do not comply to the expected behavior/performance of the autonomous vehicle. In addition, once the set of scenarios are generated, formal verification can provide a proof that that the set of scenarios are sufficient to verify the behavior of the autonomous vehicle.

To generate the set of scenarios, the method may include reducing a scenario search space to a reduced search space associated with unsafe scenarios, wherein the scenario search space comprises one of scenario definition and parameter intervals representing potential driving conditions of the autonomous vehicle, wherein the unsafe scenarios represent safety critical driving conditions of the autonomous vehicle, wherein the safety critical driving conditions comprises driving conditions critical to the safety of the autonomous vehicle, occupants of the autonomous vehicle and an environment associated with the autonomous vehicle, whereby the reduced search space and an eliminated search space is generated.

The scenario search space refers to the entire design space from which multiple scenarios can be generated. The scenario search space may have multiple levels of abstraction. In an example, the scenario search space may include scenarios defined in a natural language and may be referred a functional scenario. The scenario search space in this level of abstraction defines a scenario readable by a human but needs further processing to be used in simulations. The present invention may be used to define the functional search space to arrive at the set of scenarios that can be simulated. In an embodiment, parameter ranges/intervals are assigned to scenario descriptions of the functional scenarios to form logical scenarios. The logical scenarios may then be pruned to generate the set of scenarios. A logical scenario is therefore a collection of potential scenarios of interest. The set of scenarios can also be referred to as concrete scenarios. For executing simulations using the set of scenarios, the parameters of the set of scenarios are set to a specific value and is considered as concrete scenarios. A concrete scenario represents a solution within the range of the parameters described in a logical scenario.

For example, a functional scenario may include "three-lane motorway in a curve, with a 100km/h speed limit indicated by traffic signals". The associated logical scenario may include "lane width=2-5m, curve radius=0.6-0.8km, traffic sign position=0-200m. Accordingly, the concrete scenarios (i.e. the generated set of scenarios) may include "lane width=3.1m, curve radius=0.68km, traffic sign position=60m".

As used herein scenario definition refers to actors or elements (static elements/dynamic elements) and actions performed by a given scenario in the scenario search space. The parameter interval refers to a parameter range within which the concrete scenario may be defined. As used herein, the actors/elements may include of living objects, non-living objects, animate objects and/or inanimate objects that may be in the autonomous vehicle or in the environment. For example, the actors include pedestrians, vehicles, buildings, etc. The actions include actions taken by the actors in a given scenario.

The effect of reducing the scenario search space results in identifying the reduced search space with the unsafe scenarios. In an embodiment, the effect of reducing the scenario search space is identifying the reduced search space associated with specific behavior/performance scenarios. The reduced search space provides a region/space from which the set of scenarios are generated. Accordingly, the method may include generating the set of scenarios by defining the unsafe scenarios in the reduced search space as simulate-able parameters associated with the driving conditions of the autonomous vehicle.

By using contract-based design the reduction of the scenario search space also has the effect that the eliminated search space does not contain any unsafe scenarios. In an embodiment, the contract-based design is done by describing inputs to the scenario search space as contracts. Accordingly, the method may include describing the scenario definition and the parameter intervals using contract-based design, wherein static elements, and dynamic elements of the scenario definition are described as contracts comprising assumptions and guarantees reflecting behavior and interaction of the static elements and the dynamic elements. The behavior and interaction of the static and dynamic elements includes interaction between one or more static elements, one or more dynamic elements or between static and dynamic elements. The contract is used to capture the behavior of the elements as tuples of assumptions and guarantees. In an embodiment, the assumptions and grantees enable description of the role of each element in achieving the unsafe scenarios. An example contract may be "when autonomous vehicle 1 is at speed 90kms/hr, autonomous vehicle 2 is at speed 95kms/hr, a collision will occur at traffic intersection X.

The system for verifying behavior of the autonomous vehicle includes the scenario generator module which may further include a contract generator module configured to describe the static elements, and the dynamic elements of the scenario definition as contracts comprising assumptions and guarantees representing behavior and interaction of the static elements and the dynamic elements. The scenario generator module may also include a pruning module configured to reduce the scenario search space to the reduced search space associated with unsafe scenarios. The pruning module is further configured to identify the eliminated search space.

To further enable identification of the unsafe scenarios, the method may include generating the contracts in one or more levels with at least two goals, the at least two goals comprising scenario goals and safety goals, wherein the scenario goals comprise parameters that reflect the unsafe scenarios, and wherein the safety goals comprise measures to check for occurrence of the unsafe scenarios. In an embodiment, the top-level contract defines two main goals. Scenario goals are requirements that aim to position the autonomous vehicle in a dangerous position, where it has to act to avoid critically unsafe situations. Safety goals are defined to include measures for the autonomous vehicle to check its success in passing a safety test. For example, when no collision occurs, or deceleration rate was within a specific limit. The safety goals can be formally indicated as a top-level contract. In certain embodiments, the safety tests are defined by regulatory authorities, such as Euro NCAP. The tests are developed to assess their performance in critical driving conditions simulated on a test track environment.

The generation of the contracts in terms of the scenario goals and the safety goals enables identification of scenarios of interest that act as a basis on which the set of scenarios are generated. The method may include identifying a scenario of interest when the scenario goals are satisfied and the safety goals are potentially violated, wherein the scenario of interest is an unsafe scenario; and generating the set of scenarios from a collection of one or more scenarios of interest. Accordingly, the scenarios of interest are identified by determining the scenarios which have higher possibility of failing the safety test for the autonomous vehicle.

The contract generator module of for verifying behavior of the autonomous vehicle may be configured to generate the contracts in one or more levels with at least two goals, the at least two goals comprising scenario goals and safety goals, wherein the scenario goals comprise requirements that reflect the unsafe scenarios, and wherein the safety goals comprise measures to avoid the unsafe scenarios.

In an embodiment, the generated contracts and the scenarios of interest may be stored in databases for reuse. Accordingly, the system for verifying behavior of the autonomous vehicle may include a scenario database configured to store scenarios of interest for the autonomous vehicle, wherein the scenarios of interest are scenarios which satisfy the scenario goals and potentially violate the safety goals; and a contract database configured to store the contracts as behavior libraries for the autonomous vehicle.

The scenario search space may be pruned or reduced by identifying regions where the scenarios of interests are present. Accordingly, the method may include highlighting regions in the scenario search space comprising the scenarios of interest; and determining the eliminated search space as non-highlighted regions when scenarios in the non-highlighted regions satisfy the safety goals or are not relevant with respect to the scenario goals. Further, the method may include pruning the scenario search space by removing the non-highlighted regions in the scenario search space. The scenario goals and the safety goals are used to validate that the set of scenarios are sufficient to verify the behavior of the autonomous vehicle. The verification and validation may include establishing standards for requirements of the set of scenarios, formalizing behavior/performance requirements and safety requirements.

In an embodiment, the highlighted regions and the non-highlighted regions are visualized. The pruning of the non-highlighted regions may be performed by cutting of slices in the scenario search space, which are known to result in safe scenarios, without eliminating any of the unsafe scenarios in the highlighted regions. To visualize the highlighted and the non-highlighted regions of the scenario search space, the system for verifying the behavior of the autonomous vehicle may include a Graphical User Interface (GUI) to enable interactive generation of the set of scenarios, the GUI configured to: display the highlighted regions in the scenario search space comprising one or more scenarios of interest, wherein the scenarios of interest comprises the unsafe scenarios where the scenario goals are satisfied and the safety goals are potentially violated; and display the eliminated search space as non-highlighted regions when scenarios in the non-highlighted regions search space satisfy the safety goals. Accordingly, the method may include displaying the highlighted regions, the non-highlighted regions and the eliminated search space.

The outcome of the pruning and the validation results in the generation of the set of scenarios that may be simulated on a simulation software. In an embodiment, the set of scenarios may be used to generate a security model. The method may include defining a security model for the autonomous vehicle comprising a mapping of the set of scenarios with design requirements of the autonomous vehicle and risks associated with the set of scenarios. The security model may be stored in the scenario database and extracted to generate simulations of the autonomous vehicles as a simulation as a service.

The security model enables the autonomous vehicles to have a high degree of acceptability when the security risks of automation are enumerated and evaluated. The set of scenarios used to build the security model enable recognition of threats, classify them and develop protection strategies for autonomous vehicle.

The method may include simulating the behavior of the autonomous vehicle for the safety critical driving conditions (or for the safety tests) by executing the set of scenarios, preferably in a multi-physics system simulation software; and generating new design requirements for the autonomous vehicle based on the simulated behavior of the autonomous vehicle, wherein the new design requirements mitigate at least one of risks associated with the set of scenarios. Alternatively, the method may include generating safety certificates for the autonomous vehicle based on the simulation. The set of scenarios that are simulated enable learning from failures observed during simulations. The observations may be made part of the scenario-based test strategy for a fleet of autonomous vehicles.

The GUI may accordingly be configured to display a simulation of the behavior of the autonomous vehicle for the safety critical driving conditions by executing the set of scenarios, preferably in a multi-physics system simulation software hosted on the system; and display risks associated with the set of scenarios and new design requirements for the autonomous vehicle, wherein the new design requirements mitigate at least one of the risks.

This present invention aims to solve an important issue facing the verification and validation of the behavior of autonomous mobility systems. It provides a technique to synthesize scenarios that are only relevant to the test-case in hand. The use of contracts allows for formalizing requirements for each actor in the test-case i.e. scenario. The reduced scenario space increases the efficiency to investigate the search space since the pruning process eliminates search areas where all potential concrete scenarios are safe. Further, assuming that the autonomous vehicle passed the tests in the reduced parameter space, then the methodology guarantees that there are no corner-cases that can appear.

The above technical effect is achieved by dividing the requirements of a scenario into a set of assumption and guarantees for each actor/element. The assumption and guarantees are written in a formal logic, such as temporal, or first-order logic. Once the contracts are defined, the scenario search space can be pruned into smaller spaces using different formal reasoning techniques. The pruned/reduced space allows for exploring the tighter space. The formal verification advantageously provides proof to ensure that exploring the reduced search space is sufficient for the autonomous vehicle to pass the safety test.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a method of reducing a scenario search space, according to an embodiment of the present invention;
- FIG 2: illustrates a visualization of scenarios of interest in the scenario search space, according to an embodiment of the present invention
- FIG 3: illustrates an unsafe scenario, according to an embodiment of the present invention;
- FIG 4: illustrates a block diagram of a system for verifying behaviour of autonomous vehicles, according to an embodiment of the present invention; and
- FIG 5: illustrates method for verifying behaviour of autonomous vehicles, according to an embodiment of the present invention.

Hereinafter, embodiments for carrying out the present invention are described in detail. The various embodiments are de-scribed with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

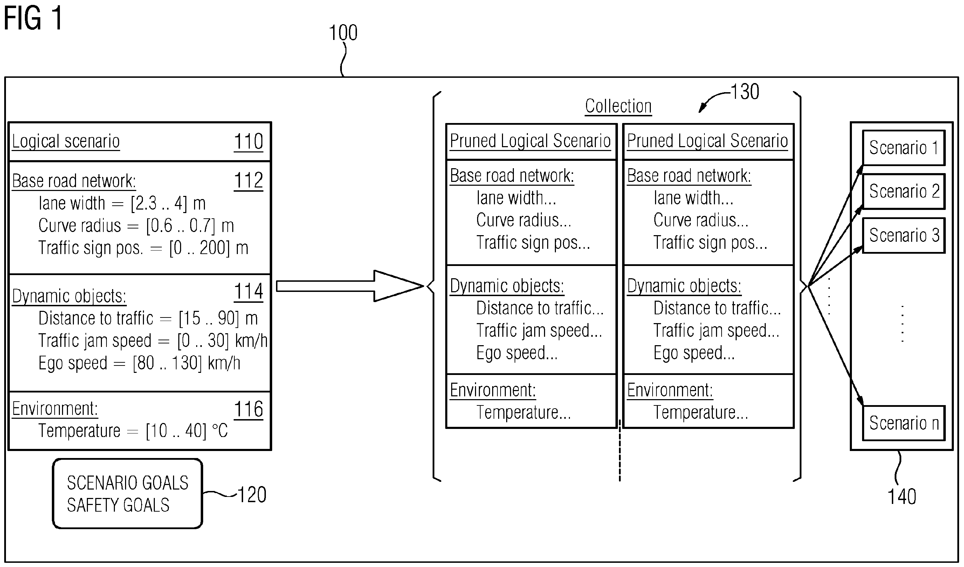

FIG 1 illustrates a method 100 of reducing a scenario search space, according to an embodiment of the present invention. According to Fig. 1, the method 100 starts with logical scenario 110. As indicated, the logical scenario 110 refer to scenarios with some abstraction in scenario definition. The logical scenario 110 includes definition for Base road network 112, Dynamic objects 114 and environment 116.

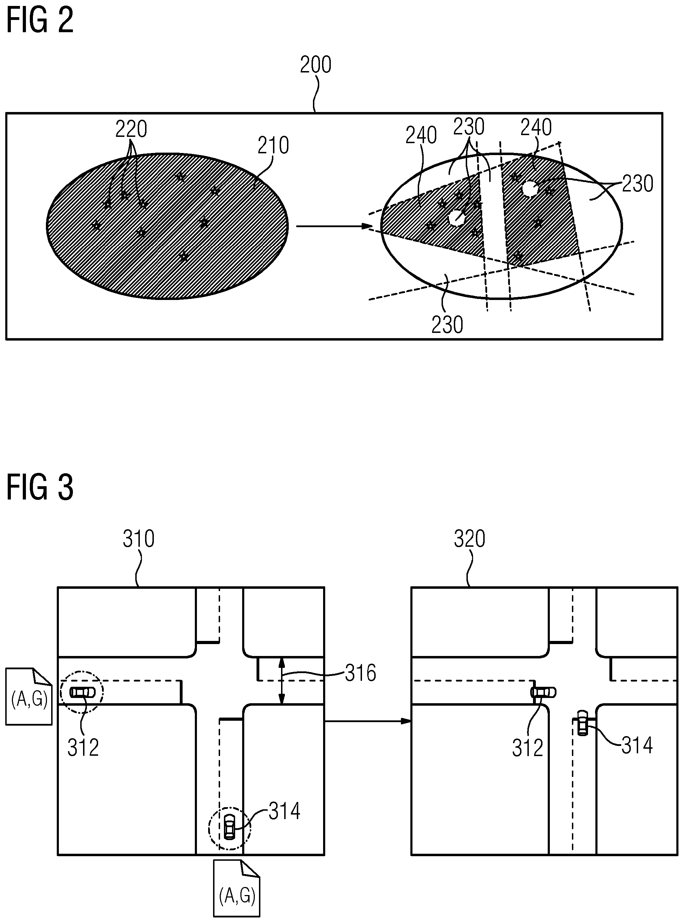

The logical scenario 110 is defined using contract-based design and described in relation to scenario goals and safety goals 120. By generating the contracts for the logical scenario 110, constraints on static elements, dynamic elements/objects, behaviour of actors in the logical scenario 110 are evaluated in relation to the scenario goals and the safety goals. An example of the scenario goals and safety goals are illustrated in Fig. 3.

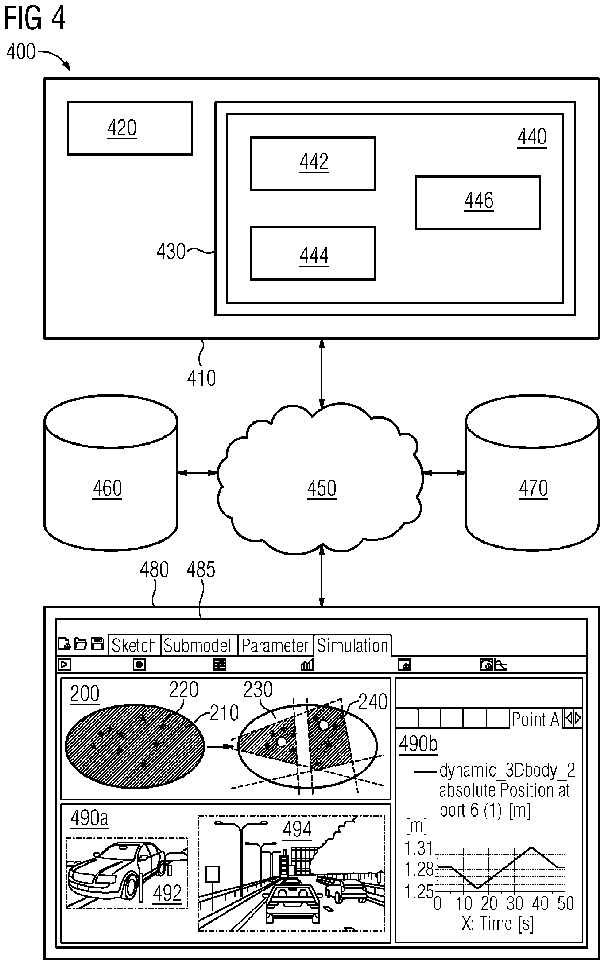

The outcome of the contract-based design is a collection 130 of pruned logical scenarios, where parameter intervals are streamlined. For example, base road network 112 is streamlined to more relevant parameter intervals in the collection 130. The pruning is performed by evaluating the parameter intervals that satisfy the scenario goals and potentially violate the safety goals.
Once the pruned logical scenarios 130 are generated, concrete scenarios i.e. the set of scenarios 140 are generated. For each concrete scenario 140, the parameters are specific. Therefore, the behaviour of the autonomous vehicles is simulate-able by executing the concrete scenarios 140 in a simulation software. Fig. 4 illustrates the simulation of the behaviour of the autonomous vehicle based on the concrete scenarios (i.e. the set of scenarios) 140.

FIG 2 illustrates a visualization 200 of scenarios of interest 220 in the scenario search space 210, according to an embodiment of the present invention. A person skilled in the art will appreciate that the scenarios of interest 220 include other highlighted scenarios indicated by star shapes in the scenario search space 210.

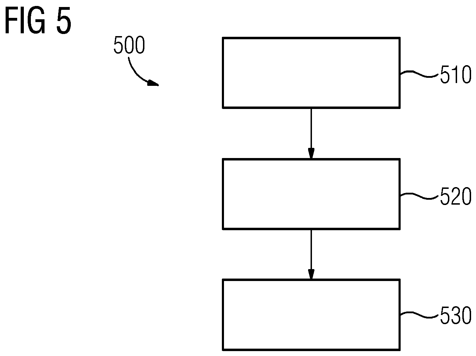

By implementing the method disclosed in the present invention as disclosed in Fig. 5, reduced search space 240 and eliminated search space 230 are identified/generated. The methodology aims to reduce the scenario search space 210 by cutting of slices, which are known to result in safe scenarios, without eliminating any of the unsafe scenarios in the reduced search space 240.

The method of pruning the scenario search space 210 can be used in conjunction with other techniques such as stochastic sampling or scenario optimization. The method disclosed herein acts as a catalyst to the above-mentioned techniques by guiding them to work on areas where scenarios of interests have higher concentrations (i.e. the reduced search space 240) .

FIG 3 illustrates an unsafe scenario 320, according to an embodiment of the present invention. In Fig. 3, in an intersection crossing scenario 310 is illustrated, the scenario definition includes the road layout 316, a target vehicle (i.e. potentially colliding vehicle) 314, and the autonomous vehicle 312. The autonomous vehicle 312, the target vehicle 314 and the road layout 316 are described in a scenario description language that dictate that expected behaviour. The scenario description language describes the autonomous vehicle 312, the target vehicle 314 and the road layout 316 in terms of Assumptions and Guarantees i.e. A,G. Accordingly, each element in the scenario 310 would capture the required behaviour in an Assume/Guarantee contract that describes the role of the autonomous vehicle 312 and the target vehicle 314 in achieving the unsafe situation (right picture) for testing. The generation of the unsafe scenario 320 is achieved using safety goals defined in the contract for the scenario 310. The safety goals are captured in a top-level contract and act as the boundary of the safe behaviour of the autonomous vehicle 312 and the target vehicle 314. As shown the unsafe scenario 320 is a potential collision of the autonomous vehicle 312 and the target vehicle 314.

FIG 4 illustrates a block diagram of a system 400 for verifying behaviour of autonomous vehicles, according to an embodiment of the present invention. As shown, the system 400 is implemented on a distributed computing environment, such as a cloud computing environment. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

The system 400 includes a server 410 communicatively coupled to a user device 480 via a communication network 450. The system 400 may also include a scenario database 460 and a contract database 470. Further, the system 400 may include a Graphical User Interface 485 accessible via the user device 480.

The server 410 includes a processor 420 and a memory 430 communicatively coupled with each other. In an embodiment, the server 410 may include multiple virtual machines configured to interact with each other to implement the function of the server 410. The memory 430 is configured to store machine readable instructions that are executed by the processor 420. The machine-readable instructions for the present invention are stored as a scenario generator module 440. The scenario generator module 440 includes a contract generator module 442, a pruning module 444 and a simulation module 446. When the processor 420 executes the machine-readable instructions in the scenario generator module 440, a set of scenarios are generated which are communicated to a simulation software.

The GUI 485 is configured as an interface to the simulation software hosted on either on the user device 480 or on the server 410. A user is capable of visualizing generation of a set of scenarios according to the present invention, in the visualization 200. Further, the user is capable of visualizing simulation of the autonomous vehicles using simulations 490A and 490B.

The scenario database 460 and the contract database 470 are used to store the set of scenarios and contracts generated according to the present invention. The scenario database 460 and the contract database 470 provide modularity to the present invention. Accordingly, many elements from one scenario can be re-used in a new scenario. Further, the set of scenarios and the contracts may be accessed via Application Programming Interface (API) by a simulation test bench (simulation software) to run simulations 490A and 490B. Furthermore, the contracts and the set of scenarios may be offered as libraries of behaviour for elements in a scenario.

For example, "maintain a 10m distance as long as there's a vehicle in front of the autonomous vehicle" is a behaviour.

The operation of the system 400 is explained in relation to the method 500 in Fig. 5.

FIG 5 illustrates a method 500 for verifying behaviour of autonomous vehicles, according to an embodiment of the present invention. The method 500 begins at step 510 by generating contracts for scenarios in a scenario search space. The scenario search space refers to the entire design space for the autonomous vehicles from which multiple scenarios can be generated. The scenario search space may have multiple levels of abstraction. For the purpose of Fig. 4 and Fig. 5 parameter ranges/intervals are assigned to scenario descriptions that are in natural language to form the scenarios in the scenario search space.

At step 510, the contract generator module 442 is configured to describe the scenario definition and the parameter intervals using contract-based design, wherein static elements, and dynamic elements of the scenario definition are described as contracts comprising assumptions and guarantees reflecting behavior and interaction of the static elements and the dynamic elements. The contract generator module 442 is further configured to generate the contracts in one or more levels with at least two goals, the at least two goals comprising scenario goals and safety goals, wherein the scenario goals comprise parameters that reflect the unsafe scenarios, and wherein the safety goals comprise measures to check for occurrence of the unsafe scenarios.

In an embodiment, the contract generator module 422 may be configured to generate the contracts by extracting relevant contracts from the contract database 470. The contracts generated by the contract generator module 422 may be stored in the contract database 470 as behavior libraries.

As a result of generating the contracts at step 510, one or more scenarios of interest are identified when the scenario goals are satisfied and the safety goals are potentially violated. The scenarios of interest are identified based on how the safety goals are defined in the contracts generated. In the present embodiment, the safety goals are associated with safety critical driving conditions. In other embodiments, the safety goals may include comfort related driving conditions and may accordingly be defined as behavior goals.

At step 520, the pruning module 444 is configured to reduce the scenario search space to a reduced search space associated with unsafe scenarios, wherein the unsafe scenarios represent safety critical driving conditions of the autonomous vehicle, wherein the safety critical driving conditions comprises driving conditions critical to the safety of the autonomous vehicle, occupants of the autonomous vehicle and an environment associated with the autonomous vehicle. Accordingly, at step 520, the pruning module 444 is configured to generate the reduced search space and an eliminated search space.

The pruning module 444 is configured to generate the reduced search space 240 by highlighting regions in the scenario search space comprising the scenarios of interest 220; and determining the eliminated search space 230 as non-highlighted regions when scenarios in the non-highlighted regions satisfy the safety goals or are not relevant with respect to the scenario goals. Further at step 520, the pruning module 444 is configured to prune the scenario search space by removing the non-highlighted regions in the scenario search space. In an embodiment, the non-highlighted regions are pruned by slicing the scenario search space 210.

As a result of the pruning at step 520, the set of scenarios are generated from a collection of the scenarios of interest. Accordingly, at step 520 the scenarios of interest i.e. the unsafe scenarios in the reduced search space are defined with specific parameters to enable simulation of the set of scenarios on the simulation software. When the set of scenarios are executed on the simulation software the driving conditions of the autonomous vehicle are simulated.

To enable simulation of the set of scenarios, the simulation module 446 is configured to interface with the simulation software. For the purpose of the method 500, at step 530 the simulation module 446 is configured to simulate the behavior of the autonomous vehicles (represented on the GUI 485 by a virtual model 492) for the safety critical driving conditions (represented on the GUI 485 with the numeral 494) executing the set of scenarios. Preferably, in an embodiment the simulation software generated/hosted using the simulation module 446 is a multi-physics system simulation software.

The simulation software is configured to map the set of scenarios to design requirements and identify risks to the occupants, the environment and/or the autonomous vehicles for the set of scenarios. Further at step 530, the simulation module 446 is configured to generate new design requirements for the autonomous vehicle based on the simulated behavior of the autonomous vehicle, wherein the new design requirements mitigate at least one of risks associated with the set of scenarios. As shown in Fig. 4, the GUI 485 displays the simulation 490A with the virtual representations 492 and 494 and the simulation 490B indicating the change in parameters of the autonomous vehicle for the set of scenarios.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or de-vice) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination there-of) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A computer implemented method for verifying behavior of at least one autonomous vehicle (492), the method comprising:
generating a set of scenarios to verify the behavior of the autonomous vehicle (492) using contract-based design of the autonomous vehicle (492), wherein the set of scenarios (140) comprise parameters associated driving conditions of the autonomous vehicle (492); and
validating that the set of scenarios are sufficient to verify the behavior of the autonomous vehicle (492).

2. The method according to claim 1, wherein generating the set of scenarios further comprising:
reducing a scenario search space (210) to a reduced search space associated with unsafe scenarios (220), wherein the scenario search space (210) comprises one of scenario definition and parameter intervals representing potential driving conditions of the autonomous vehicle (492), wherein the unsafe scenarios (220) represent safety critical driving conditions of the autonomous vehicle (492), wherein the safety critical driving conditions comprises driving conditions critical to the safety of the autonomous vehicle (492), occupants of the autonomous vehicle (492) and an environment associated with the autonomous vehicle (492), whereby the reduced search space and an eliminated search space is generated; and
generating the set of scenarios by defining the unsafe scenarios (220) in the reduced search space as simulate-able parameters associated with the driving conditions of the autonomous vehicle (492).

3. The method according to claim 2, further comprising:
describing the scenario definition and the parameter intervals using contract-based design, wherein static elements, and dynamic elements of the scenario definition are described as contracts comprising assumptions and guarantees reflecting behavior and interaction of the static elements and the dynamic elements.

4. The method according to one of the preceding claims, further comprising:
generating the contracts in one or more levels with at least two goals, the at least two goals comprising scenario goals and safety goals, wherein the scenario goals comprise parameters that reflect the unsafe scenarios (220), and wherein the safety goals comprise measures to check for occurrence of the unsafe scenarios (220).

5. The method according to one of the preceding claims, further comprising:
identifying a scenario of interest (220) when the scenario goals are satisfied and the safety goals are potentially violated, wherein the scenario of interest is an unsafe scenario; and
generating the set of scenarios from a collection of one or more scenarios of interest.

6. The method according to one of claim 2 and claim 5, wherein reducing the scenario search space (210) associated with unsafe scenarios (220) comprises determining the eliminated search space, wherein determining the eliminated search space comprises:
highlighting regions (240) in the scenario search space (210) comprising the scenarios of interest; and
determining the eliminated search space (230) as non-highlighted regions when scenarios in the non-highlighted regions satisfy the safety goals or are not relevant with respect to the scenario goals.

7. The method according to claim 6, further comprising:
pruning the scenario search space (210) by removing the non-highlighted regions in the scenario search space (210).

8. The method according to one of the preceding claims, further comprising:
simulating the behavior of the autonomous vehicle (492) for the safety critical driving conditions by executing the set of scenarios, preferably in a multi-physics system simulation software; and
generating new design requirements for the autonomous vehicle (492) based on the simulated behavior of the autonomous vehicle (492), wherein the new design requirements mitigate at least one of risks associated with the set of scenarios.

9. A system for verifying behavior of at least one autonomous vehicle (492), the system comprising:
At least one processor; and
At least one memory including computer readable instructions stored as a scenario generator module, the scenario generator module when executed by the processor is configured to:
generate a set of scenarios to verify the behavior of the autonomous vehicle (492) using contract-based design of the autonomous vehicle (492), wherein the set of scenarios simulate driving conditions of the autonomous vehicle (492); and
validate that the set of scenarios are sufficient to verify the behavior of the autonomous vehicle (492).

10. The system according to claim 9, wherein the scenario generator module comprises:
a contract generator module configured to:
describe static elements, and dynamic elements of a scenario definition as contracts comprising assumptions and guarantees representing behavior and interaction of the static elements and the dynamic elements, wherein a scenario search space (210) comprises one of the scenario definition and parameter intervals representing represent potential driving conditions of the autonomous vehicle (492); and
a pruning module configured to:
reduce the scenario search space (210) to a reduced search space associated with unsafe scenarios (220), wherein the unsafe scenarios (220) represent safety critical driving conditions of the autonomous vehicle (492), wherein the safety critical driving conditions comprises driving conditions critical to the safety of the autonomous vehicle (492), occupants of the autonomous vehicle (492) and an environment associated with the autonomous vehicle (492), whereby the reduced search space and an eliminated search space are generated.

11. The system according to claim 10, wherein the contract generator module is configured to:
generate the contracts in one or more levels with at least two goals, the at least two goals comprising scenario goals and safety goals, wherein the scenario goals comprise requirements that reflect the unsafe scenarios (220), and wherein the safety goals comprise measures to avoid the unsafe scenarios (220).

12. The system according to one of claims 9-11, further comprising:
a scenario database (460) configured to store scenarios of interest for the autonomous vehicle (492), wherein the scenarios of interest are scenarios which satisfy the scenario goals and potentially violate the safety goals; and
a contract database (470) configured to store the contracts as behavior libraries for the autonomous vehicle (492) .

13. The system according to one of the claims 9-12, further comprising:
a Graphical User Interface (GUI) (485) to enable interactive generation of the set of scenarios, the GUI (485) configured to:
display highlighted regions in the scenario search space (210) comprising one or more scenarios of interest (220), wherein the scenarios of interest comprises the unsafe scenarios (220, 320) where the scenario goals are satisfied and the safety goals are potentially violated; and
display the eliminated search space as non-highlighted regions (230) when scenarios in the non-highlighted regions search space satisfy the safety goals.

14. The system according to claim 13, wherein the GUI is configured to:
display a simulation of the behavior of the autonomous vehicle (492) for the safety critical driving conditions by executing the set of scenarios, preferably in a multi-physics system simulation software hosted on the system; and
display risks (320) associated with the set of scenarios (140) and new design requirements for the autonomous vehicle (492), wherein the new design requirements mitigate at least one of the risks.

15. A computer readable medium having machine-readable instructions stored therein, which when executed by a processing unit, cause the processing unit to perform the method according to at least one of claims 1-8.
